# EUROPEAN PATENT SPECIFICATION

(11) **EP 3 579 692 B1**
(45) Date of publication and mention of the grant of the patent: **03.12.2025**
(21) Application number: 18751814.7
(22) Date of filing: 08.02.2018
(51) Int. Cl.: A01K 63/10, A01K 61/60, B63B 59/10

(54) **APPARATUS FOR REMOVAL AND COLLECTION OF FOULING FROM A DIVED STRUCTURE AND A METHOD FOR USING THE APPARATUS**
VORRICHTUNG ZUM ENTFERNEN UND SAMMELN VON VERSCHMUTZUNG AUS EINER GETEILTEN STRUKTUR UND VERFAHREN ZUR VERWENDUNG DER VORRICHTUNG
APPAREIL D'ÉLIMINATION ET DE COLLECTE DE SALISSURES À PARTIR D'UNE STRUCTURE IMMERGÉE ET PROCÉDÉ D'UTILISATION DE L'APPAREIL

(30) Priority: 08.02.2017 NO 20170195
(43) Date of publication of application: 18.12.2019
(73) Proprietor: Koral Patent AS, 7178 Stokkøy (NO)
(72) Inventor: SOLBERG, Hallgeir Lennart, 7178 Stokkøy (NO)
(74) Representative: Håmsø Patentbyrå AS
(86) International application number: PCT/NO2018/050036
(87) International publication number: WO 2018/147746

(56) References cited:
- WO-A1-03/059732
- WO-A1-2009/110802
- WO-A1-2012/064201
- WO-A1-2016/166325
- KR-A- 20150 138 138
- KR-B1- 101 386 420
- US-A1- 2010 307 545
- US-A1- 2016 137 277
- US-B1- 6 942 790

## Description

The invention relates to an apparatus for cleaning submerged structures. The apparatus is arranged to clean a surface of the submerged structures of organisms that form a fouling and to collect the loosened organisms. More specifically, the cleaning apparatus provides suction that makes water flow over or through the submerged structures, while, at the same time, the amount of water is so large that a strong water current is created. The strong water current has enough energy to tear the fouling loose. The fouling is not whirled up and out into the water but is collected in the current of water. More specifically, the invention relates to a cleaning apparatus for cleaning submerged structures of a fish farm.

Fish-farming may take place on floating fish farms. Such fish farms will include one or more cages. A cage comprises a closed enclosure for the fish. The enclosure may be kept spread and afloat by one or more floating bodies surrounding the closed enclosure. The closed enclosure may be formed of a mesh. The mesh is referred to as a net or netting. The cage is then an open cage. The closed enclosure may also be formed of a tight cloth. The cage is then a closed cage.

The cage may further include a railing surrounding the enclosure. The railing is usually secured to the floating body. It is common for a jump net to be attached to the railing. The jump net is an extension of the closed enclosure, and the jump net projects above a water surface. The jump net prevents fish from escaping by getting over the floating body. The cage may further include a bird net which is extended over the enclosure. The cage may also include a bottom ring which keeps the enclosure spread below the water surface.

A cage is further provided with a mooring system and a feeding system.

Over time, organisms in sea water will cover submerged surfaces. This is known as fouling. The bottom side of the floating body will become fouled. The thread of the netting will also become fouled, and the same will happen to the mooring system and the bottom ring. The fish in the enclosure is dependent on there being a supply of oxygen-rich water to the enclosure. In an open cage, a fouled netting will reduce the exchange of oxygen-rich water.

Pathogenic organisms may stay in the fouling. Such pathogens may be bacteria, protozoa/amoebae and eggs from crustacean parasites, like salmon lice (*Lepeophtheirus salmonis*)*.*

There is therefore a need to keep especially the netting clean of fouling through a production cycle for fish in the enclosure. The use of brushes and high-pressure washing to remove fouling is known. Such tools may be effective for loosening the fouling. Nevertheless, they have the drawback of not collecting the loosened fouling. The loosened fouling may float around inside the enclosure and this may irritate the gills of the fish. Possible pathogenic organisms are thereby brought into the cage and into the water surrounding the fish so that the infection pressure increases. The loosened fouling may also reattach to the netting when a water current is carrying the loosened fouling into contact with the netting.

The need for cleaning the netting depends on the temperature, season and local current conditions, among other things. It is common to clean every two weeks, sometimes more often and sometimes more rarely.

High-pressure washing is known to wear the threads of the netting. Repeated high-pressure washing may result in the threads becoming torn, so that a hole arises in the netting, through which the fish may escape. This is an undesired situation.

Document KR 101386420B1 discloses a cleaning device comprising a caterpillar propelled structure. A mouthpiece comprising a rotatable brush is fixedly connected to the structure. Document US 2016/137277A1 discloses an apparatus for cleaning an underwater surface. The apparatus comprises an enclosure fitted with two counter-rotating brushes equipped with bristles, and a discharge opening for relieving the enclosure with matter removed from the surface. Document US 6942790 discloses a suction chamber unit comprising two scrubbing brushes and an impeller powered by a motor drive. Water containing debris is pumped into a filter tube. Document WO 03/059732 A1 discloses a device comprising a self-priming cleaning head with a suction hose leading water with slurry to a coarse filter and via a vacuum pump through a drain hose with a micro filter. The cleaning head is movable by means of a telescopic extendable rod.

There is thus a need for equipment and a method that can clean the netting in a gentle way. There is also a need for equipment and a method which can collect loosened fouling so that this can be removed from the cage and the fish farm, and by which possible pathogenic organisms are removed together with the loosened fouling.

The invention has for its object to remedy or reduce at least one of the drawbacks of the prior art or at least provide a useful alternative to the prior art.

The object is achieved through the features that are specified in the description below and in the claims that follow.

The invention relates to the use of a pump which is connected via a channel or a suction hose to a mouthpiece which is moved across the netting. The mouthpiece may be moved by means of a remotely operated vehicle, also known as an ROV. The pump may be an ejector, and the ejector may be supplied with a motive fluid from a vessel. The discharge liquid of the pump is carried through a discharge channel to a vessel. The pump may be positioned on the vessel. When the pump consists of an ejector, the discharge is carried through a discharge channel to a vessel which may be the same vessel as the one providing the motive fluid. The ejector may be placed on the same vessel that provides the motive fluid, and in such a way that the ejector is positioned between the mouthpiece and a treatment unit for collecting a loosened material. Alternatively, the pump may be connected to a raft floating on a water surface inside a cage or on the outside of a cage. The pump may be positioned on top of the raft or, alternatively, be submerged in a well in the raft or, alternatively, hang submerged on the outside of the raft or further alternatively hang submerged under the raft. The pump may further alternatively be connected to the ROV moving the mouthpiece. The treatment unit may be positioned on the vessel.

It is essential for the invention that the pressure formed at the mouthpiece is a low pressure, such as a pressure which is somewhat lower than the ambient pressure, so that surrounding water will enter the mouthpiece. It is also essential for the invention that there is a large amount of water flowing past the netting and into the mouthpiece. This is in contrast to high-pressure washing in which there is a small amount of water at high pressure flowing past the netting. By a large amount of water is meant, for example, an amount of water which is larger than 50 m³ per hour, for example 75 m³ per hour, or for example 100 m³ per hour, or more, such as 125 m³ per hour, 150 m³ per hour, 175 m³ per hour, or 200 m³ per hour, and even more than 200 m³ per hour.

The mouthpiece may be provided with a surrounding contact portion. The surrounding contact portion may include stationary brushes that lead water into the mouthpiece and that keep the netting or another surface, such as a floating body, a bottom ring or a mooring system at a distance from the mouthpiece. The mouthpiece may further be provided with one or more rotary brushes that are positioned between the mouth portion of the mouthpiece and a surface.

In a first aspect, the invention relates more specifically to an apparatus for removing and collecting fouling from a submerged structure. The apparatus is characterized by including:
- a pump;
- a mouthpiece provided with an outlet portion;
- a treatment unit for collecting a material from a discharge water;
- a discharge channel between the outlet of the pump and the treatment unit; and
- a means of moving the mouthpiece along the submerged structure,
and an inlet of the pump is connected to and is in fluid communication with the outlet portion of the mouthpiece by a channel in a rotation mechanism, said rotation mechanism is arranged to rotate the mouthpiece around a centre axis of a frame of the apparatus.

The mouthpiece may be provided with a surrounding contact portion. The mouthpiece may be provided with a brush. The brush may be a rotary brush. The brush may be a fixed, stationary brush. The rotary brush may be provided with a plurality of bristles attached in a helical pattern to a stem in the brush.

A suction hose may connect the inlet of the pump to the outlet portion of the mouthpiece. The rotation mechanism may comprise a swivel.

The pump may consist of an ejector which comprises an inlet, an outlet, a motive-fluid inlet and a nozzle, and the ejector may be provided with a motive fluid from a feed pump.

In an alternative embodiment, the pump may include an electric motor for driving the pump. In an alternative embodiment, the pump may include a hydraulic motor for driving the pump.

The treatment unit may include a filter. The filter may be a movable filter. The filter may be a rotary filter such as a drum filter. The filter may be a belt filter comprising a movable filter cloth.

The means moving the mouthpiece along the submerged structure may comprise a remotely operated craft. The craft may be an ROV. In an alternative embodiment, the means may be a craft with at least one track. In a further embodiment, the means may be a craft with at least one wheel.

The submerged structure may include a netting. The submerged structure may include a floating body, especially the bottom side of a floating body. The submerged structure may include a bottom ring. The submerged structure may include an anchoring. The submerged structure may include a hull. The submerged structure may include a fixed installation such as a foundation.

The material in the discharge water from the ejector may include loosened fouling from the submerged structure.

The mouthpiece may be adapted for the surface of the submerged structure to be cleaned. The mouthpiece may be adapted for being moved across a submerged solid surface. A submerged solid surface may comprise a floating body, a hull or a foundation. The mouthpiece may be adapted for being moved over a submerged netting. The mouthpiece may be adapted for being moved over a bottom ring in a cage. The mouthpiece may be adapted for being moved over an elongated body such as an anchoring, a wire or a line.

The pump may be positioned connected to a raft floating on a water surface. The pump may be positioned on top of the raft. The pump may also be positioned submerged and hanging under the raft. The pump may be positioned submerged and hanging at the side of the raft. The pump may be positioned on a vessel. The pump may be positioned against the outlet portion of the mouthpiece.

In a second aspect, the invention relates, more specifically, to a method for cleaning a submerged structure. The method is characterized by:
- providing a cleaning apparatus as described above; and
- passing a liquid at a pressure lower than the ambient pressure across or through the submerged structure and into the mouthpiece.

The pump may consist of an ejector and the ejector may be supplied with a motive fluid at a pressure of between 5 and 30 bar. The ejector may be provided with a motive fluid from a feed pump.

The motive fluid may have a pressure of between 10 and 25 bar. The motive fluid may have a pressure of between 15 and 25 bar, such as 20 bar. The motive fluid may be supplied to the apparatus in an amount of 100 m³ per hour. The motive fluid may be supplied to the apparatus in an amount of 115 m³ per hour. The motive fluid may be supplied to the apparatus in an amount of 125 m³ per hour. The motive fluid may be supplied to the apparatus in other amounts per hour adapted to the structure to be cleaned.

A material in the discharge water of the cleaning apparatus may be collected. The material may be fouling which has been removed from the submerged structure.

In what follows, examples of preferred embodiments are described, which are visualized in the accompanying drawings, in which:
- Figure 1: shows schematically a floating cage in a side view and an apparatus according to the invention for cleaning a netting;
- Figure 2: shows the cage and the cleaning apparatus shown in figure 1 in a view from above;
- Figure 3: shows a perspective view, on a larger scale, of an elongated mouthpiece in one embodiment seen at an angle from behind, the mouthpiece being attached to a frame;
- Figure 4: shows the same as figure 3, the mouthpiece being seen at an angle from the front;
- Figure 5: shows a side view, on an even larger scale, of the mouthpiece and the frame, the mouthpiece being oriented in the same direction as the longitudinal axis of the frame;
- Figure 6: shows the same as figure 5, but the mouthpiece is slanted relative to the longitudinal axis of the frame;
- Figure 7: shows a side view, on an even larger scale, of the mouthpiece seen from the front;
- Figure 8: shows the same as figure 7, but the mouthpiece has been rotated 90° around a centre;
- Figures 9A-B: show a side view and a section, on an even larger scale, of an ejector in one embodiment;
- Figure 10: shows the same as figure 3 in a perspective view on a different scale, but the frame is attached to an ROV;
- Figure 11: shows a perspective view, on a different scale, of the ROV attached to the frame, the mouthpiece being slanted as shown in figure 6; and
- Figure 12: shows a perspective view, on a different scale, of the ROV attached to the frame, the mouthpiece having been rotated 90° around a centre axis as shown in figure 8.

In the figures, the reference numeral 1 indicates a cage. A cleaning apparatus 2 is positioned inside the cage 1. The cleaning apparatus 2 is operated from a vessel 3.

The cage includes a netting 11, a surrounding floating body 12, a bottom ring 13, an anchoring 14, a surrounding railing 15 and a weight 16. The floating body 12 is shown as a floating ring 121. The floating body 12 is floating on a water surface 9.

The cleaning apparatus 2 includes a mouthpiece 21 which is in fluid communication with a pump. In the figures, the pump is shown as an ejector 22. The ejector 22 is shown positioned connected to a raft 4 floating on the water surface 9 inside the net pen 1. The fluid connection between the ejector 22 and the mouthpiece 21 may comprise a suction hose 23. The ejector 22 is supplied with a motive fluid through a motive-fluid channel 24 between the vessel 3 and the ejector 22. The motive fluid is a low-pressure motive fluid provided by a low-pressure feed pump 25 on the vessel 3. The ejector 22 may be positioned on the vessel 3 (not shown).

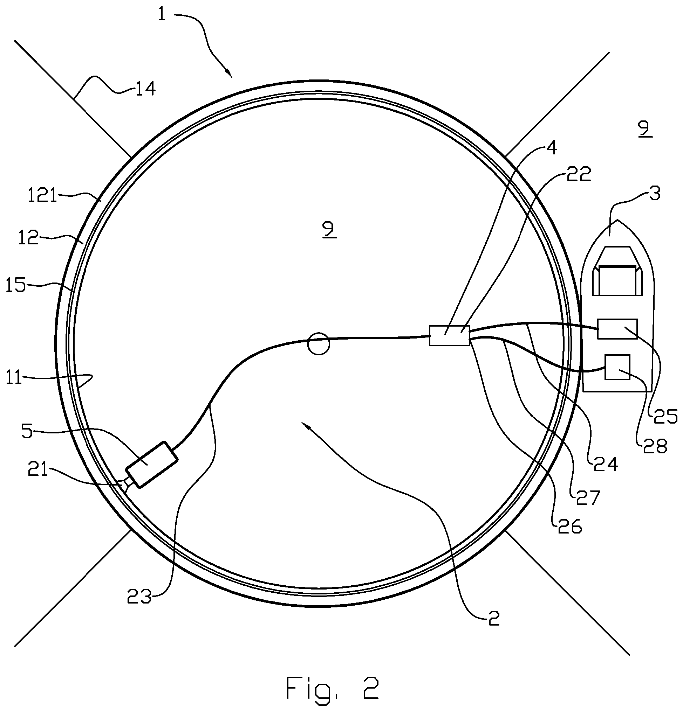

In an alternative embodiment, the ejector 22 may be positioned on top of the raft 4 as shown in figure 2. In an alternative embodiment, the ejector 22 may be positioned submerged and hanging on the side of the raft 4. In a further alternative embodiment, the raft 4 may be provided with a well opening (not shown) and the ejector 22 may be positioned submerged in a well (not shown). In yet another further embodiment, the ejector 22 may be positioned hanging under the raft 4.

The outlet 26 of the ejector 22 is connected to a discharge channel 27. The discharge channel 27 carries the discharge of the ejector 22 to a treatment unit 28 where material (not shown) in the discharge water is collected, whereas the water is led back into the sea. The treatment unit 28 may include a filter. The treatment unit 28 may be positioned on the vessel 3 as shown in figure 2.

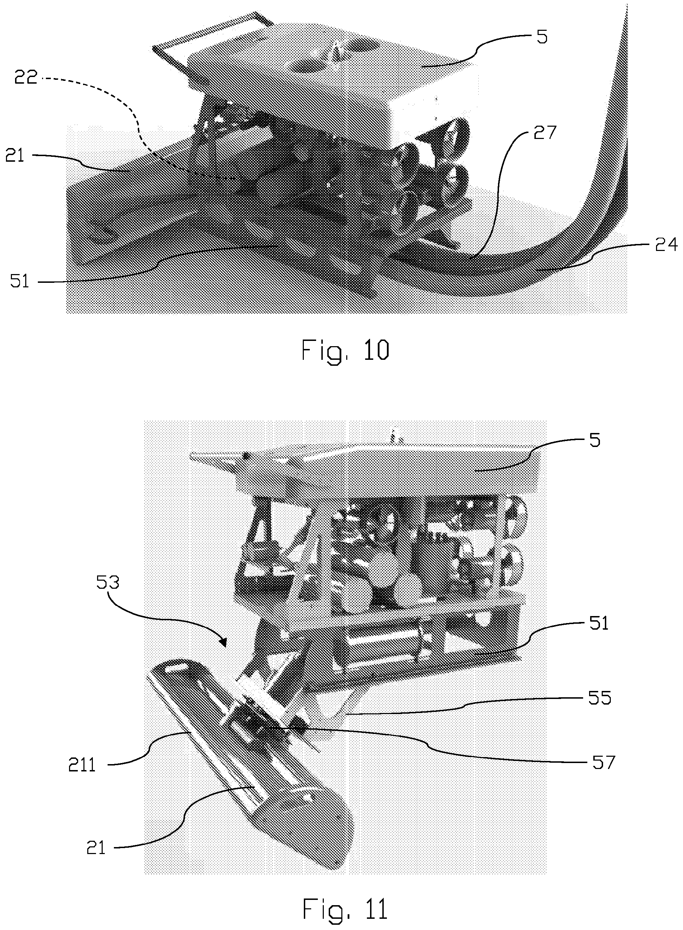

The mouthpiece 21 is moved along the netting 11 by means of an ROV 5. In one embodiment, the ejector 22 may be connected to the ROV 5 by the ejector 22 possibly being positioned in a frame 51 as shown in figure 10. The frame 51 is connected to the ROV 5.

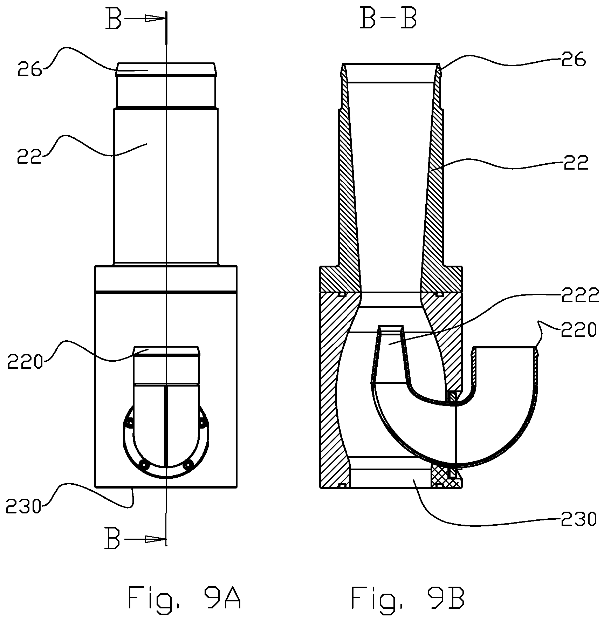

The ejector 22 is of a known type and the principle of operation of an ejector 22 is known. An ejector 22 according to a possible embodiment is shown in figures 9A-B. The motive fluid is carried from the motive-fluid channel 24 into the ejector 22 at a motive-fluid inlet 220 and is carried towards the outlet 26 through a nozzle 222. The motive fluid will entrain liquid from the suction hose 23 through the inlet 230 of the ejector 22. Liquid enters the suction hose 23 through the mouthpiece 21. Such dimensions are chosen for the low-pressure feed pump 25, motive-fluid channel 24, suction hose 23 and mouthpiece 21 that surrounding liquid will enter the mouthpiece 21 at a pressure which is lower than the ambient pressure and in a large volume. The low-pressure feed pump 25 delivers the motive fluid at a pressure of between 5 and 30 bar, typically between 10 and 25 bar, for example 20 bar. Surrounding liquid will flow through the netting 11 and into the mouthpiece 21. The amount of liquid entering the mouthpiece 21 is so large that the liquid will sweep fouling from the netting 11 along. At the same time, the pressure is so low that the netting 11 will not be damaged.

A low-pressure feed pump 25 may, for example, deliver approximately 115 m³ of motive fluid per hour at a pressure of 20 bar. With this motive fluid, the ejector 22 has a capacity of approximately 200 m³ per hour at its suction side. At the outlet, the ejector 22 delivers a liquid flow of approximately 315 m³ per hour. This liquid flow is passed across a filter in the treatment unit 28. The example elucidates the invention but is not meant to restrict the invention to these volumes.

The mouthpiece 21 may be provided with a surrounding contact portion 211. In one embodiment, the surrounding contact portion 211 may include fixed, stationary brushes (not shown) leading water into the mouthpiece 21. The stationary brushes can keep the netting 11 at a distance from the mouthpiece 21 so that the netting 11 is not sucked into the mouthpiece 21. The stationary brushes will also loosen fouling from the netting 11. The stationary brushes will also keep the mouthpiece 21 at a distance from other surfaces such as a floating body 12, a bottom ring 13 and an anchoring 14.

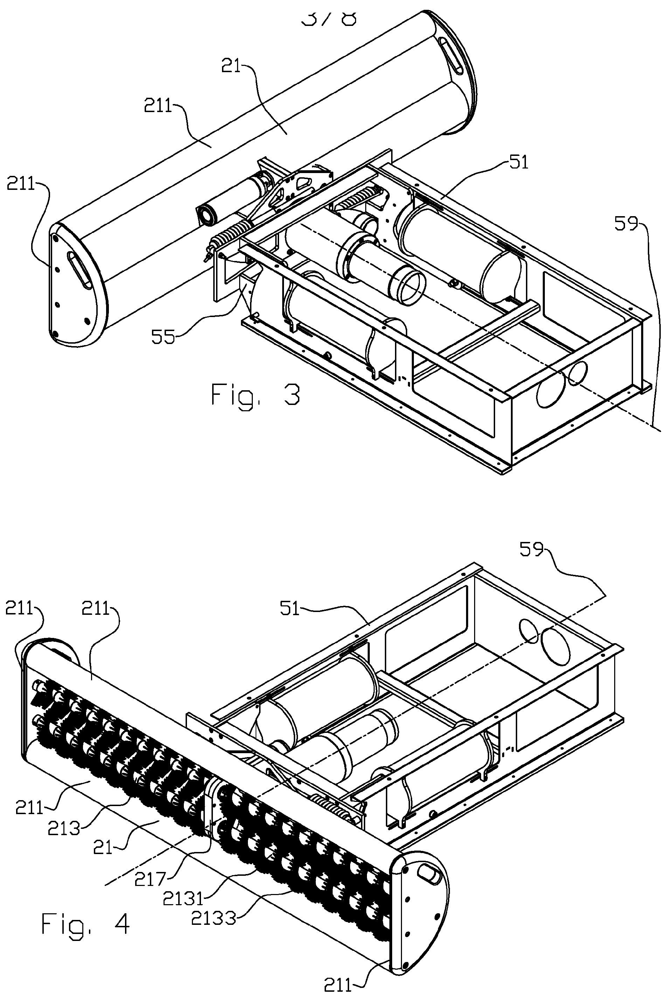

In an alternative embodiment, the mouthpiece 21 is provided with at least one rotary brush 213. The at least one rotary brush 213 is positioned between the mouth portion 215 of the mouthpiece 21 and a surface. The brush 213 is brought to rotate by a motor 217. The motor 217 may be an electrically driven motor 217 or a hydraulically driven motor 217. In one embodiment, the mouthpiece 21 is provided with two rotary brushes. These rotate in opposite directions, bringing the fouling in towards the centre of the mouthpiece 21. Figures 4, 7, 8, 12 show rotary brushes 213 in an alternative embodiment. A brush 213 comprises an elongated stem 2131 in which a plurality of bristles 2133 are attached to the stem in a helical pattern along the stem 2131. The motor 217 and the helical brush 2133 are arranged to bring loosened material from the netting 11 in towards the centre of the mouthpiece 21 and in towards an outlet portion 215.

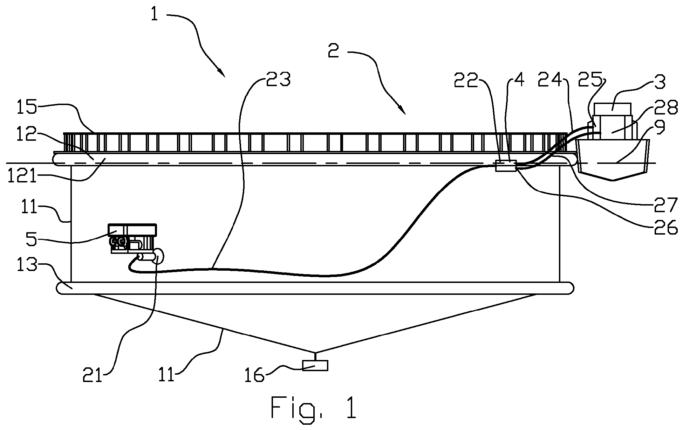

In the embodiment shown in figures 1 and 3, fouling loosening from the netting 11 will be carried to the treatment unit 28 through the suction hose 23, the ejector 22 and the discharge channel 27. The fouling is separated from the liquid in the treatment unit 28, for example by means of a filter. The filter may be a drum filter. The filter may be a belt filter. Collected fouling may be taken to shore. It is thereby achieved that fouling will not remain in the water around the cage 1. In the embodiment shown in figure 10, the fouling is carried through the ejector 22 and the discharge channel 27. In this embodiment, the ejector 22 may be positioned against the outlet portion 215 via a channel (not shown) in a rotation mechanism 57. The rotation mechanism 57 may comprise a swivel (not shown).

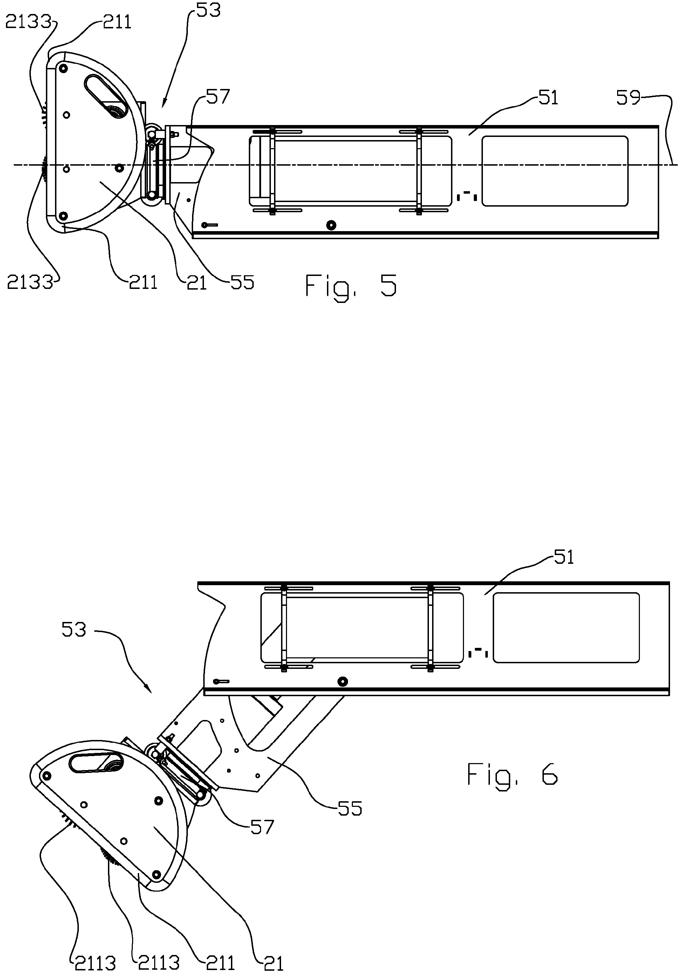

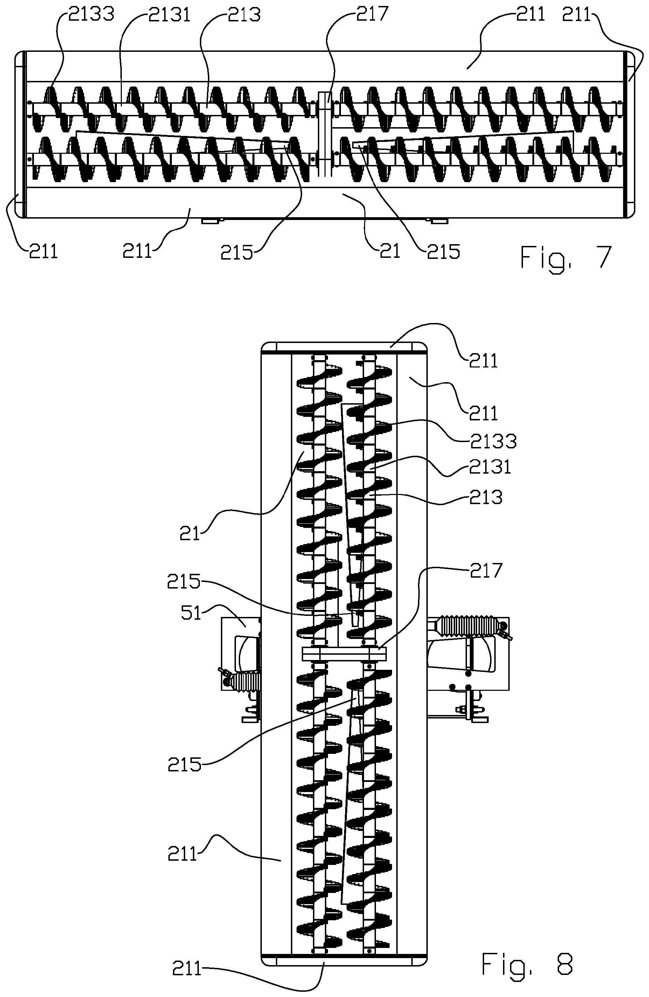

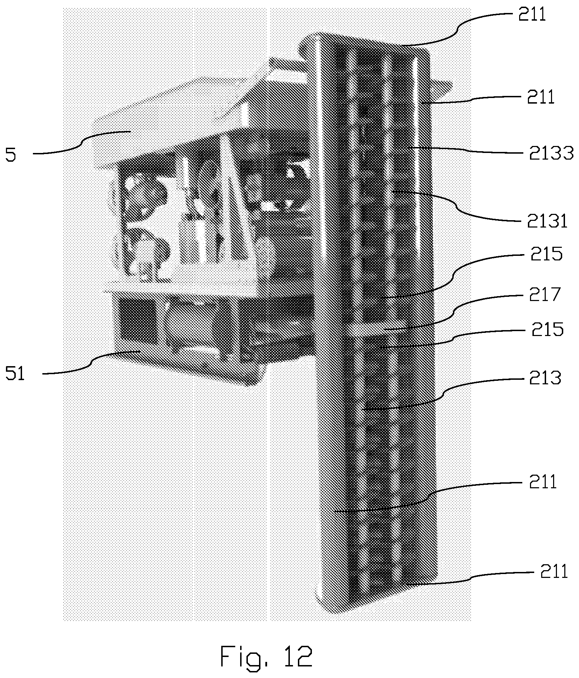

The frame 51 is shown provided with a mounting 53 for the attachment of the mouthpiece 21 to the frame 51. The mounting 53 may include a pivotable arm 55 which is shown most clearly in figure 6. An actuator (not shown) may be connected between the arm 55 and the frame 51 to rotate the arm 55. The actuator may be a hydraulic actuator or an electric actuator. The mounting 53 may further include the rotation mechanism 57. The rotation mechanism 57 is arranged to rotate the mouthpiece 21 around the centre axis 59 of the frame 51, see figure 5. The rotation mechanism 57 may rotate the mouthpiece 21 to a desired position, such as 90° as shown in figures 8 and 12.

In figures 1 and 2, it is shown that the cleaning apparatus 2 is positioned inside the cage 1. The cleaning apparatus 2 will also work with the mouthpiece 21 being placed on the outside of the netting 11. The netting 11 can be cleaned from the outside of the cage 1.

The embodiment shown in figures 3-5, 10 is suitable for cleaning a netting 11 which is oriented substantially vertically, see figure 1. By means of the ROV 5 the mouthpiece 21 is moved vertically up and down along the netting 11. The embodiment that is shown in figures 6 and 11 is suitable for cleaning the lower portion of the cage 1, where the netting 11 is of a substantially conical shape, see figure 1. The ROV 5 may thereby maintain its most suitable orientation in the water. The embodiment shown in figures 8 and 12 is suitable for cleaning the vertically oriented netting 11, and the ROV 5 moves the mouthpiece 21 sideways along the netting 11 and at the same depth. This may be advantageous as there is the most fouling at the top of netting 11 and less fouling down along the netting 11.

The mouthpiece 21 may be adapted for cleaning other submerged structures than a netting 11. For example, a floating body 12, a bottom ring 13 and an anchoring 14 may be cleaned in the same, or in a corresponding, way. The floating body 12 will preferably be cleaned on its bottom side as the bottom side constitutes the major part of the submerged portion of the floating body 12.

The mouthpiece 22 may be positioned on the netting 11 by other means than a freely swimming ROV 5. In one embodiment (not shown), the mouthpiece 22 may be attached to a craft which is moved across the netting 11 by means of tracks. In an alternative embodiment (not shown), the mouthpiece 22 may be attached to a craft that is moved across the netting 11 by means of one or more wheels.

The invention has, in the main, been described for cleaning a netting 11 in a cage 1. The embodiments shown in figures 3-8, and 10-12 are also suitable for cleaning other submerged surfaces, such as hulls of ships and fixed installations made of concrete or metal.

It should be noted that all the above-mentioned embodiments illustrate the invention, but do not limit it, and persons skilled in the art may construct many alternative embodiments without departing from the scope of the attached claims. In the claims, reference numbers in brackets are not to be regarded as restrictive.

The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. Apparatus (2) for removing and collecting fouling from a submerged structure (11; 12; 13; 14), wherein the apparatus (2) includes:
- a pump;
- a mouthpiece (21) provided with an outlet portion (215);
- a treatment unit (28) for collecting a material from a discharge water;
- a discharge channel (27) between an outlet of the pump and the treatment unit (28); and
- a means for moving the mouthpiece (21) along the submerged structure (11; 12; 13; 14),
said apparatus (2) being **characterized in that** an inlet of the pump is connected to and is in fluid communication with the outlet portion (215) of the mouthpiece (21) by a channel in a rotation mechanism (57), said rotation mechanism (57) is arranged to rotate the mouthpiece (21) around a centre axis (59) of a frame (51) of the apparatus (2).

2. The apparatus (2) according to claim 1, wherein the mouthpiece (21) is provided with a surrounding contact portion (211).

3. The apparatus (2) according to any one of the preceding claims, wherein the mouthpiece (21) is provided with a brush.

4. The apparatus (2) according to claim 3, wherein the brush is a rotary brush (213).

5. The apparatus (2) according to claim 4, wherein the rotary brush (213) is provided with a plurality of bristles (2133) attached in a helical pattern.

6. The apparatus (2) according to any one of the preceding claims, wherein a suction hose (23) connects the inlet of the pump to the outlet portion (215) of the mouthpiece (21).

7. The apparatus (2) according to any one of the preceding claims, wherein the pump consists of an ejector (22) which includes an inlet (230), an outlet (26), a motive-fluid inlet (220) and a nozzle (222), and the ejector (22) is supplied with a motive fluid from a feed pump (25).

8. The apparatus (2) according to any one of the preceding claims, wherein the treatment unit (28) comprises a filter.

9. The apparatus (2) according to any one of the preceding claims, wherein the means for moving the mouthpiece (21) along the submerged structure (11; 12; 13; 14) comprises a remotely operated craft (5).

10. A method for cleaning a submerged structure and collecting a loosened material from the structure (11; 12; 13; 14), **characterized in that** the method is **characterized by**:
- providing an apparatus (2) according to claim 1; and
- passing a liquid at a pressure lower than the ambient pressure across or through the submerged structure (11; 12; 13; 14) and into the mouthpiece (21).

11. The method according to claim 10, wherein the pump consists of an ejector (22) and the ejector (22) is supplied with a motive fluid at a pressure p of between 5 and 30 bar.

12. The method according to any one of claims 10 and 11, wherein a material in the discharge water of the cleaning apparatus (2) is collected.

13. The method according to any one of claims 10 to 12, wherein the apparatus (2) is provided with a brush positioned between the outlet portion (215) and a surface.

14. The method according to claim 13, wherein the apparatus (2) is provided with a rotating brush (213).

15. The method according to any one of claims 10 to 14, wherein the apparatus (2) is provided with a remotely operated craft (5) as a means for guiding the mouthpiece (21) along the submerged structure.

## Patentansprüche

1. Vorrichtung (2) zum Entfernen und Sammeln von Verschmutzung von einer Unterwasserstruktur (11; 12; 13; 14), wobei die Vorrichtung (2) Folgendes einschließt:
- eine Pumpe;
- ein Mundstück (21), das mit einem Auslassabschnitt (215) bereitgestellt ist;
- eine Behandlungseinheit (28) zum Sammeln eines Materials aus einem Ablaufwasser;
- einen Ablaufkanal (27) zwischen einem Auslass der Pumpe und der Behandlungseinheit (28); und
- ein Mittel zum Bewegen des Mundstücks (21) entlang der Unterwasserstruktur (11; 12; 13; 14),
wobei die Vorrichtung (2) **dadurch gekennzeichnet ist, dass** ein Einlass der Pumpe mit dem Auslassabschnitt (215) des Mundstücks (21) durch einen Kanal in einem Drehmechanismus (57) verbunden ist und in Fluidverbindung steht, wobei der Drehmechanismus (57) so angeordnet ist, dass er das Mundstück (21) um eine Mittelachse (59) eines Rahmens (51) der Vorrichtung (2) dreht.

2. Vorrichtung (2) nach Anspruch 1, wobei das Mundstück (21) mit einem umgebenden Kontaktabschnitt (211) bereitgestellt ist.

3. Vorrichtung (2) nach einem der vorstehenden Ansprüche, wobei das Mundstück (21) mit einer Bürste bereitgestellt ist.

4. Vorrichtung (2) nach Anspruch 3, wobei die Bürste eine Drehbürste (213) ist.

5. Vorrichtung (2) nach Anspruch 4, wobei die Drehbürste (213) mit einer Vielzahl von Borsten (2133) bereitgestellt ist, die in einem spiralförmigen Muster angebracht sind.

6. Vorrichtung (2) nach einem der vorstehenden Ansprüche, wobei ein Ansaugschlauch (23) den Einlass der Pumpe mit dem Auslassabschnitt (215) des Mundstücks (21) verbindet.

7. Vorrichtung (2) nach einem der vorstehenden Ansprüche, wobei die Pumpe aus einem Ejektor (22) besteht, der einen Einlass (230), einen Auslass (26), einen Antriebsfluid-Einlass (220) und eine Düse (222) einschließt, und der Ejektor (22) mit einem Antriebsfluid aus einer Förderpumpe (25) versorgt wird.

8. Vorrichtung (2) nach einem der vorstehenden Ansprüche, wobei die Behandlungseinheit (28) einen Filter umfasst.

9. Vorrichtung (2) nach einem der vorstehenden Ansprüche, wobei die Mittel zum Bewegen des Mundstücks (21) entlang der Unterwasserstruktur (11; 12; 13; 14) ein ferngesteuertes Fahrzeug (5) umfassen.

10. Verfahren zum Reinigen einer Unterwasserstruktur und zum Sammeln von gelöstem Material von der Struktur (11; 12; 13; 14), **dadurch gekennzeichnet, dass** das Verfahren **gekennzeichnet ist durch**:
- Bereitstellen einer Vorrichtung (2) nach Anspruch 1; und
- Leiten einer Flüssigkeit mit einem Druck, der niedriger ist als der Umgebungsdruck, über oder **durch** die Unterwasserstruktur (11; 12; 13; 14) und in das Mundstück(21) hinein.

11. Verfahren nach Anspruch 10, wobei die Pumpe aus einem Ejektor (22) besteht und der Ejektor (22) mit einem Antriebsfluid mit einem Druck p zwischen 5 und 30 bar versorgt wird.

12. Verfahren nach einem der Ansprüche 10 und 11, wobei ein Material im Ablaufwasser der Reinigungsvorrichtung (2) gesammelt wird.

13. Verfahren nach einem der Ansprüche 10 bis 12, wobei die Vorrichtung (2) mit einer Bürste bereitgestellt ist, die zwischen dem Auslassabschnitt (215) und einer Oberfläche positioniert ist.

14. Verfahren nach Anspruch 13, wobei die Vorrichtung (2) mit einer Drehbürste (213) bereitgestellt ist.

15. Verfahren nach einem der Ansprüche 10 bis 14, wobei die Vorrichtung (2) mit einem ferngesteuerten Fahrzeug (5) als Mittel zum Führen des Mundstücks (21) entlang der Unterwasserstruktur bereitgestellt ist.

## Revendications

1. Appareil (2) permettant d'éliminer et de collecter des salissures à partir d'une structure immergée (11 ; 12 ; 13 ; 14), dans lequel l'appareil (2) inclut :
- une pompe ;
- un embout (21) fourni avec une partie sortie (215) ;
- une unité de traitement (28) permettant de collecter un matériau à partir d'une eau d'évacuation ;
- un canal d'évacuation (27) entre une sortie de la pompe et l'unité de traitement (28) ; et
- un moyen permettant de déplacer l'embout (21) le long de la structure immergée (11 ; 12 ; 13 ; 14), ledit appareil (2) étant **caractérisé en ce qu'**une entrée de la pompe est reliée à et est en communication fluidique avec la partie sortie (215) de l'embout (21) par un canal dans un mécanisme de rotation (57), ledit mécanisme de rotation (57) étant agencé de manière à faire tourner l'embout (21) autour d'un axe central (59) d'un cadre (51) de l'appareil (2).

2. Appareil (2) selon la revendication 1, dans lequel l'embout (21) est fourni avec une partie de contact environnante (211).

3. Appareil (2) selon l'une quelconque des revendications précédentes, dans lequel l'embout (21) est fourni avec une brosse.

4. Appareil (2) selon la revendication 3, dans lequel la brosse est une brosse rotative (213).

5. Appareil (2) selon la revendication 4, dans lequel la brosse rotative (213) est fournie avec une pluralité de poils (2133) fixés selon un schéma hélicoïdal.

6. Appareil (2) selon l'une quelconque des revendications précédentes, dans lequel un tuyau d'aspiration (23) relie l'entrée de la pompe à la partie sortie (215) de l'embout (21).

7. Appareil (2) selon l'une quelconque des revendications précédentes, dans lequel la pompe est constituée d'un éjecteur (22) qui inclut une entrée (230), une sortie (26), une entrée de fluide moteur (220) et une buse (222), et l'éjecteur (22) est fourni avec un fluide moteur en provenance d'une pompe d'alimentation (25).

8. Appareil (2) selon l'une quelconque des revendications précédentes, dans lequel l'unité de traitement (28) comprend un filtre.

9. Appareil (2) selon l'une quelconque des revendications précédentes, dans lequel le moyen permettant de déplacer l'embout (21) le long de la structure immergée (11 ; 12 ; 13 ; 14) comprend une embarcation télécommandée (5).

10. Procédé de nettoyage d'une structure immergée et de collecte d'un matériau ameubli provenant de la structure (11 ; 12 ; 13 ; 14), **caractérisé en ce que** le procédé est **caractérisé par** :
- la fourniture d'un appareil (2) selon la revendication 1 ; et
- le passage d'un liquide à une pression inférieure à la pression ambiante dans ou à travers la structure immergée (11 ; 12 ; 13 ; 14) et dans l'embout(21).

11. Procédé selon la revendication 10, dans lequel la pompe est constituée d'un éjecteur (22) et l'éjecteur (22) est fourni avec un fluide moteur à une pression p d'entre 5 bar et 30 bar.

12. Procédé selon l'une quelconque des revendications 10 et 11, dans lequel un matériau dans l'eau d'évacuation de l'appareil (2) de nettoyage est collecté.

13. Procédé selon l'une quelconque des revendications 10 à 12, dans lequel l'appareil (2) est fourni avec une brosse positionnée entre la partie sortie (215) et une surface.

14. Procédé selon la revendication 13, dans lequel l'appareil (2) est fourni avec une brosse rotative (213).

15. Procédé selon l'une quelconque des revendications 10 à 14, dans lequel l'appareil (2) est fourni avec une embarcation télécommandée (5) en tant qu'un moyen permettant de guider l'embout (21) le long de la structure immergée.
